# EUROPÄISCHE PATENTSCHRIFT

(11) **EP 3 942 914 B1**
(45) Veröffentlichungstag und Bekanntmachung des Hinweises auf die Patenterteilung: **25.12.2024**
(21) Anmeldenummer: 21185250.4
(22) Anmeldetag: 13.07.2021
(51) Int. Cl.: A01D 34/66, A01D 34/81, A01D 34/82, A01D 34/86, A01D 57/10

(54) **MÄHVORRICHTUNG**
MOWING DEVICE
DISPOSITIF DE TONTE

(30) Priorität: 24.07.2020 AT 506362020
(43) Veröffentlichungstag der Anmeldung: 26.01.2022
(73) Patentinhaber: Steininger, Werner, 4722 Peuerbach (AT)
(72) Erfinder: Steininger, Werner, 4722 Peuerbach (AT)
(74) Vertreter: KLIMENT & HENHAPEL

(56) Entgegenhaltungen:
- EP-A1- 1 776 856
- EP-A1- 1 806 046
- EP-A2- 0 099 527
- WO-A2-2004/002210
- DE-A1- 2 552 083

## Beschreibung

Die Erfindung bezieht sich auf eine Mähvorrichtung mit einem Mähwerk für Mähgut, das als Mähbalken mit zumindest zwei entlang des Mähbalkens angeordnete und jeweils um eine vertikale Drehachse drehbare Mähscheiben ausgeführt ist, wobei eine Abdeckung für den Mähbalken vorgesehen ist, die einen Sammelraum für das geschnittene Mähgut umgrenzt, und eine Auswurfeinrichtung vorgesehen ist, die ein Wurfgebläse mit einem Laufrad und einer sich in den Sammelraum öffnenden Einlauföffnung für das geschnittene und auszuwerfende Mähgut sowie ein Auswurfrohr umfasst, wobei das Wurfgebläse in einem Gebläseaufbau angeordnet ist, der eine rückseitige Begrenzungswand des Sammelraumes bildet, in der die Einlauföffnung des Wurfgebläses für das geschnittene Mähgut vorgesehen ist, und das Laufrad des Wurfgebläses in einem als Teil des Gebläseaufbaus ausgeführten Laufradgehäuse mit einer entlang der Laufraddrehachse orientierten, axialen Einlaufrichtung für das geschnittene und auszuwerfende Mähgut angeordnet ist, gemäß dem Oberbegriff von Anspruch 1.

Mähvorrichtungen der genannten Art sind aus der EP 0 099 527 A2 bekannt.

Weitere Mähvorrichtungen wurden in der DE 25 52 083 A1, EP 1 776 856 A1, WO 2004/002210 A2 sowie der EP 1 806 046 A1 beschrieben. Zudem sind Mähvorrichtungen aus dem österreichischen Patent AT 518.945 B1 sowie dem Europäischen Patent EP 3.281.511 B1 des Anmelders bekannt. Im Gegensatz zu bekannten Vorrichtungen, bei denen das Mähgut von bodennah geführten Schneidelementen geschnitten und entweder am Boden abgelegt oder einem mitgeführten Sammelbehälter zugeführt wird, kann bei den Mähvorrichtungen des Anmelders das Mähgut nicht bloß abgelegt werden, sondern aus dem Mähbereich entfernt werden. Das ist beispielsweise beim Mähen von Überschwemmungsdämmen oder Dämmen von Entlastungsbecken vorteilhaft, auf denen das Mähgut nicht liegen bleiben sollte, da es ansonsten von den nächsten Wasserbewegungen mitgeschwemmt werden würde. Zudem wirkt liegen gelassenes Mähgut im Allgemeinen auch als Dünger für nachwachsendes Mähgut, der somit für ungewünschtes, rascheres Wachstum sorgt.

Das geschnittene Mähgut könnte freilich einem mitgeführten Sammelbehälter zugeführt und entsorgt werden. Gegen eine solche Vorgangsweise gibt es zunehmend Bedenken wegen der im Mähgut enthaltenen Organismen, die für den lokalen Lebensraum mitunter als wichtig erachtet werden. Aus diesen Überlegungen sollte das Mähgut für gewisse Zeit am Boden liegen gelassen werden, um diese Organismen zu schonen und ihnen das Verlassen des Mähguts zu ermöglichen. Vor allem kommunale Flächenerhalter sind zunehmend mit solchen Anforderungen konfrontiert.

Zudem sollte die Grasnarbe während des Mähvorganges nicht verletzt werden, sodass die Flächenlast gering gehalten werden muss. Die Mähvorrichtungen müssen daher entsprechend leicht ausgeführt sein. Eine leichte und kompakte Ausführung ist vor allem auch für den oben erwähnten Einsatz auf Überschwemmungsdämmen oder Dämmen von Entlastungsbecken vorteilhaft, wo mitunter starke Hangneigungen bearbeitet werden müssen.

In den oben genannten Druckschriften AT 518.945 B1 und EP 3.281.511 B1 des Anmelders wird daher eine Mähvorrichtung beschrieben, bei der zwei nebeneinander liegende Mähscheiben vorgesehen sind, die gegensinnig rotieren und das Mähgut einem gemeinsamen Sammelbereich zuführen. Dieser Sammelbereich ist der Bereich der geringsten Beabstandung der beiden nebeneinander liegenden Mähscheiben. Diesen Sammelbereich durchlaufen die Wurfschaufeln des Laufrades eines Wurfgebläses. Ein Wurfgebläse ist ein mechanisch und pneumatisch wirkendes Fördergebläse, das über ein Laufrad und ein zum Laufrad konzentrisch angeordnetes Laufradgehäuse verfügt. Das Mähgut wird von den Wurfschaufeln des Laufrades auf deren Umfangsgeschwindigkeit beschleunigt und somit durch das Auswurfrohr ausgeworfen. Das Laufrad wird daher auch als Beschleunigerrad bezeichnet. Ein gewisser Luftstrom wirkt dabei unterstützend. Das geschnittene Mähgut wird damit in einiger Entfernung vom Mähbereich abgelagert, wo es den weiteren Mähvorgang nicht mehr beeinträchtigen kann.

Allerdings verfügen diese Mähvorrichtungen in der Praxis über den Nachteil, dass unerwünschte Mähgutbestandteile wie Steine, Erde oder sonstiges Material, das sich nicht für einen Auswurf eignet oder auch nicht ausgeworfen werden soll, den Sammelbereich belastet, den Auswurf von Mähgut beeinträchtigt oder den Sammelbereich schlimmstenfalls sogar blockieren kann. Der Sammelbereich muss in weiterer Folge von diesen unerwünschten Mähgutbestandteilen befreit werden, was bei bekannten Ausführungen aufwändig ist und die Mäharbeiten verzögert.

Es ist daher das Ziel der Erfindung eine Mähvorrichtung bereitzustellen, die klein und kompakt gebaut werden kann und auch bei schwierigem Terrain mit starkem und mitunter auch feuchtem Bewuchs einsetzbar ist, wobei der Auswurf von Mähgut durch Mähgutbestandteile, die nicht ausgeworfen werden können oder nicht ausgeworfen werden sollen, nicht beeinträchtigt wird und die Wartung und Säuberung des Mähwerks vereinfacht wird.

Dieses Ziel wird durch die Merkmale von Anspruch 1 erreicht. Anspruch 1 bezieht sich auf eine Mähvorrichtung mit einem Mähwerk für Mähgut, das als Mähbalken mit zumindest zwei entlang des Mähbalkens angeordnete und jeweils um eine vertikale Drehachse drehbare Mähscheiben ausgeführt ist, wobei eine Abdeckung für den Mähbalken vorgesehen ist, die einen Sammelraum für das geschnittene Mähgut umgrenzt, und eine Auswurfeinrichtung vorgesehen ist, die ein Wurfgebläse mit einem Laufrad und einer sich in den Sammelraum öffnenden Einlauföffnung für das geschnittene und auszuwerfende Mähgut sowie ein Auswurfrohr umfasst, wobei das Wurfgebläse in einem Gebläseaufbau angeordnet ist, der eine rückseitige Begrenzungswand des Sammelraumes bildet, in der die Einlauföffnung des Wurfgebläses für das geschnittene Mähgut vorgesehen ist, und das Laufrad des Wurfgebläses in einem als Teil des Gebläseaufbaus ausgeführten Laufradgehäuse mit einer entlang der Laufraddrehachse orientierten, axialen Einlaufrichtung für das geschnittene und auszuwerfende Mähgut angeordnet ist. Erfindungsgemäß wird vorgeschlagen, dass sich die Abdeckung zur Unterstützung des vom Wurfgebläse erzeugten Soges auf das Mähgut oberhalb und seitlich des Mähbalkens sowie in Fahrtrichtung der Mähvorrichtung gesehen vor dem Mähbalken erstreckt, wobei zwischen dem Mähbalken und der rückseitigen Begrenzungswand eine den Sammelraum nach unten öffnende Fallöffnung für nicht ausgeworfene Mähgutbestandteile vorgesehen ist.

Das Mähwerk wird in bekannter Weise als Mähbalken mit Mähscheiben ausgeführt, die jeweils um eine vertikale Drehachse drehbar angeordnet sind. Das geschnittene Mähgut wird in einem Sammelraum gesammelt, der aus dem Mähbalken und einer Abdeckung gebildet wird, die sich oberhalb und seitlich des Mähbalkens sowie vorzugsweise auch vorderseitig des Mähbalkens, also in Fahrtrichtung der Mähvorrichtung gesehen vor dem Mähbalken erstreckt. Eine rückseitige Begrenzungswand des Sammelraumes, also auf einer der Fahrtrichtung der Mähvorrichtung abgewandten Seite des Sammelraumes, wird von einem Gebläseaufbau gebildet. Das Laufradgehäuse des Wurfgebläses ist Teil des Gebläseaufbaus, wobei die

Einlauföffnung des Wurfgebläses in der rückseitigen Begrenzungswand mit axialer Einlaufrichtung für das geschnittene und auszuwerfende Mähgut angeordnet ist. Das geschnittene Mähgut wird dem Laufrad somit in Richtung der Laufraddrehachse axial zugeführt und vom Laufrad tangential in das Auswurfrohr geschleudert. Im Unterschied zu herkömmlichen Ausführungen durchqueren die Wurfschaufeln des Laufrades somit nicht mehr den Sammelraum und das geschnittene Mähgut mitsamt seinen unerwünschten Mähgutbestandteilen, sondern rotieren in einem Laufradgehäuse mit einer zur Einlauföffnung senkrechten Drehachse. Die Zufuhr des geschnittenen Mähguts zur Einlauföffnung des Wurfgebläses erfolgt durch die Vorwärtsbewegung der Mähvorrichtung, durch die Umwälzbewegungen der Mähscheiben und den vom Wurfgebläse erzeugten Luftstrom. Eine den Sammelraum nach oben, seitlich und nach vorne begrenzende Abdeckung unterstützt gemeinsam mit der rückseitigen Begrenzungswand den vom Wurfgebläse erzeugten Sog auf das Mähgut. Das Mähgut wird dabei auf seinem Weg zur Einlauföffnung innerhalb des Sammelraumes umgewälzt und bewegt, wobei unerwünschte, in der Regel schwere Mähgutbestandteile abfallen und den Sammelraum durch die Fallöffnung auch wieder verlassen können, die im Bereich zwischen der vom Gebläseaufbau gebildeten, rückseitigen Begrenzungswand und dem Mähbalken vorgesehen ist. Vorwiegend erwünschte, in der Regel leichtere Mähgutbestandteile erreichen die Einlauföffnung und werden vom Wurfgebläse ausgeworfen. Der Auswurf von Mähgut durch Mähgutbestandteile, die nicht ausgeworfen werden können oder nicht ausgeworfen werden sollen, wird somit nicht mehr beeinträchtigt.

Eine einfache Ausführung der Fallöffnung kann etwa erreicht werden, indem der Mähbalken mittels seitlicher Träger vom Gebläseaufbau beabstandet am Gebläseaufbau gehalten ist.

Der Gebläseaufbau kann als ein im Wesentlichen vertikaler Gebläseaufbau ausgeführt sein, wobei die Laufraddrehachse im Wesentlichen horizontal ausgerichtet ist. Die axiale Einlaufrichtung für das geschnittene und auszuwerfende Mähgut verläuft in Richtung der Laufraddrehachse und somit ebenfalls horizontal. Bei Verwendung zweier Mähscheiben wird das Wurfgebläse im Gebläseaufbau so angeordnet werden, dass sich die Einlauföffnung in einen mittigen Bereich zwischen den beiden Mähscheiben öffnet, die in gegensinniger Umlaufrichtung rotieren. Bei Verwendung dreier Mähscheiben wird das Wurfgebläse im Gebläseaufbau so angeordnet werden, dass sich die Einlauföffnung in einen mittigen Bereich zwischen einer mittleren und einer äußeren Mähscheibe öffnet, die in gegensinniger Umlaufrichtung rotieren, wobei die gegenüberliegend äußere Mähscheibe in dieselbe Richtung rotiert wie die mittige Mähscheibe. Das geschnittene Mähgut wird daher von der gegenüberliegend äußeren Mähscheibe zur mittigen Mähscheibe und von dort in Richtung des oben erwähnten, mittigen Bereiches zur Einlauföffnung transportiert.

Bei Verwendung von vier Mähscheiben wird das Wurfgebläse im Gebläseaufbau so angeordnet werden, dass sich die Einlauföffnung in einen mittigen Bereich zwischen den mittleren beiden Mähscheibe öffnet, die in gegensinniger Umlaufrichtung rotieren, wobei die beiden äußeren Mähscheiben in dieselbe Richtung rotieren wie die jeweils benachbarte, mittlere Mähscheibe.

Alternativ wird auch vorgeschlagen, dass der Gebläseaufbau als ein relativ zu den vertikalen Drehachsen der Mähscheiben geneigter Gebläseaufbau ausgeführt ist, und die Laufraddrehachse relativ zu den vertikalen Drehachsen der Mähscheiben geneigt ausgerichtet ist. Die axiale Einlaufrichtung für das geschnittene und auszuwerfende Mähgut verläuft wiederum in Richtung der Laufraddrehachse und somit ebenfalls geneigt. Dadurch kann die Aufnahme von geschnittenem Mähgut durch die Einlauföffnung verbessert werden. Vorzugsweise beträgt dabei der Winkel zwischen der Laufraddrehachse und einer von den vertikalen Drehachsen der Mähscheiben definierten Vertikalebene zwischen 80° und 135°.

Des Weiteren wird vorgeschlagen, dass die Abdeckung schwenkbar am Gebläseaufbau angeordnet ist und in eine den Mähbalken freigebende Stellung schwenkbar ist. Mithilfe dieser Ausführung werden Wartungsarbeiten sowie die Reinigung des Sammelraumes erleichtert.

Die Abdeckung könnte dabei nach oben verschwenkbar am Gebläseaufbau befestigt sein. Vorzugsweise wird jedoch vorgeschlagen, dass die Schwenkachse der schwenkbar am Gebläseaufbau angeordneten Abdeckung vertikal ausgerichtet ist. Die Abdeckung kann somit zur Seite verschwenkt werden, sodass weniger Kraftaufwand erforderlich ist um die Abdeckung zu verschwenken. Zudem ist die konstruktive Ausführung einfacher und eine Verletzungsgefahr durch das Herabfallen der Abdeckung wird vermieden.

Die Abdeckung erstreckt sich wie bereits erwähnt oberhalb und seitlich des Mähbalkens sowie vorzugsweise auch vor dem Mähbalken, sodass sie in Form einer Abdeckhaube ausgebildet ist. Die in Fahrtrichtung vorderste Fläche der Abdeckung liegt dabei vorzugsweise in Fahrtrichtung vor dem vordersten Umfangsbereich der Mähscheiben. Insbesondere wird vorgeschlagen, dass die Abdeckung als Plane ausgeführt ist, die gemeinsam mit der rückseitigen Begrenzungswand einen nach unten offenen aber ansonsten allseitig abgeschlossenen Sammelraum bildet, wobei die Plane an einem Rahmen mit vom Rahmen abstehenden, federnden Zinken befestigt ist. Mithilfe der federnden Zinken wird die Plane insbesondere an ihrer vordersten Fläche stabilisiert und die vom Wurfgebläse ausgeübte Sogwirkung begünstigt, die Zinken bieten aber dennoch in Fahrtrichtung aufgrund ihrer federnden Lagerung nur begrenzten Widerstand. Alternativ könnte die Abdeckung aber auch aus Blech ausgeführt sein.

Vorzugsweise wird die Mähvorrichtung gemäß der Erfindung als Teil eines selbstfahrenden Mähfahrzeuges ausgebildet sein, das somit klein und kompakt gebaut werden kann und dadurch auch auf schwierigem Terrain eingesetzt werden kann, wobei es entweder Platz für einen Fahrer bietet, oder als ferngesteuertes Fahrzeug ausgebildet sein kann. Die Mähvorrichtung könnte aber auch so ausgebildet sein, dass sie nicht selbstfahrend ist und stattdessen an ein anderes Fahrzeug angekoppelt werden kann, um von ihm gezogen oder geschoben zu werden.

Die Erfindung wird in weiterer Folge anhand eines Ausführungsbeispiels mithilfe der beiliegenden Zeichnungen näher erläutert. Es zeigen hierbei die
Fig. 1 eine perspektivische Ansicht einer Ausführungsform eines Mähfahrzeuges mit einer erfindungsgemäßen Mähvorrichtung bei unverschwenkter Abdeckung,
Fig. 2 eine weitere perspektivische Ansicht der Ausführungsform gemäß Fig. 1 bei verschwenkter Abdeckung,
Fig. 3 die Ausführungsform gemäß Fig. 1 von vorne entgegen die Fahrtrichtung gesehen,
Fig. 4 eine seitliche Ansicht der Ausführungsform gemäß Fig. 1,
Fig. 5 die Ausführungsform gemäß Fig. 1 von oben gesehen,
Fig. 6 eine vergrößerte Darstellung des Bereiches zwischen dem Gebläseaufbau und dem Mähbalken für die Ausführungsform gemäß Fig. 1 in einer Schnittansicht entlang der in Fig. 3 eingezeichneten Schnittebene A-A, und die
Fig. 7 eine vergrößerte Darstellung des Bereiches zwischen dem Gebläseaufbau und dem Mähbalken für eine weitere Ausführungsform mit geneigtem Gebläseaufbau.

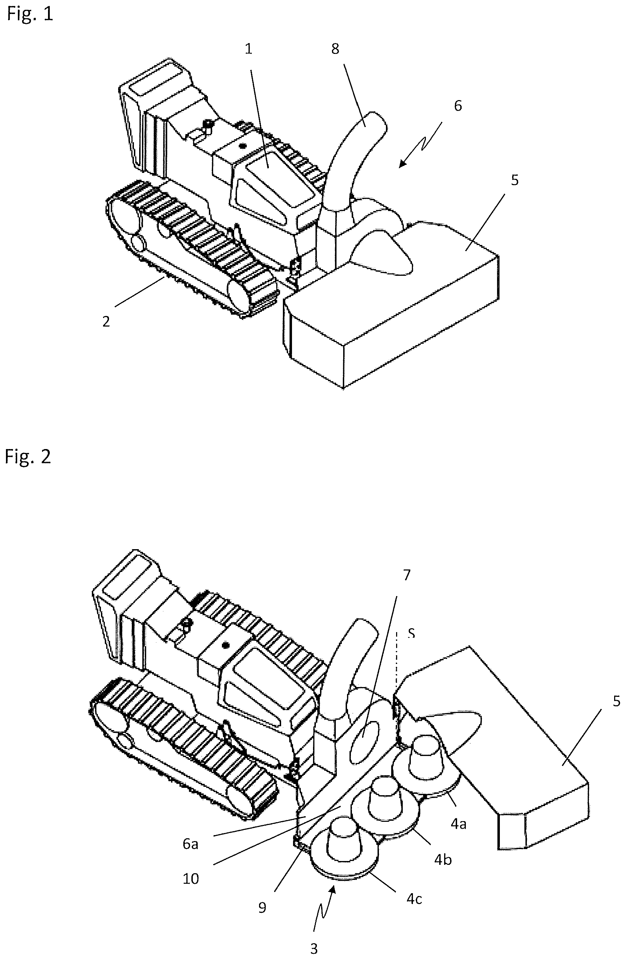

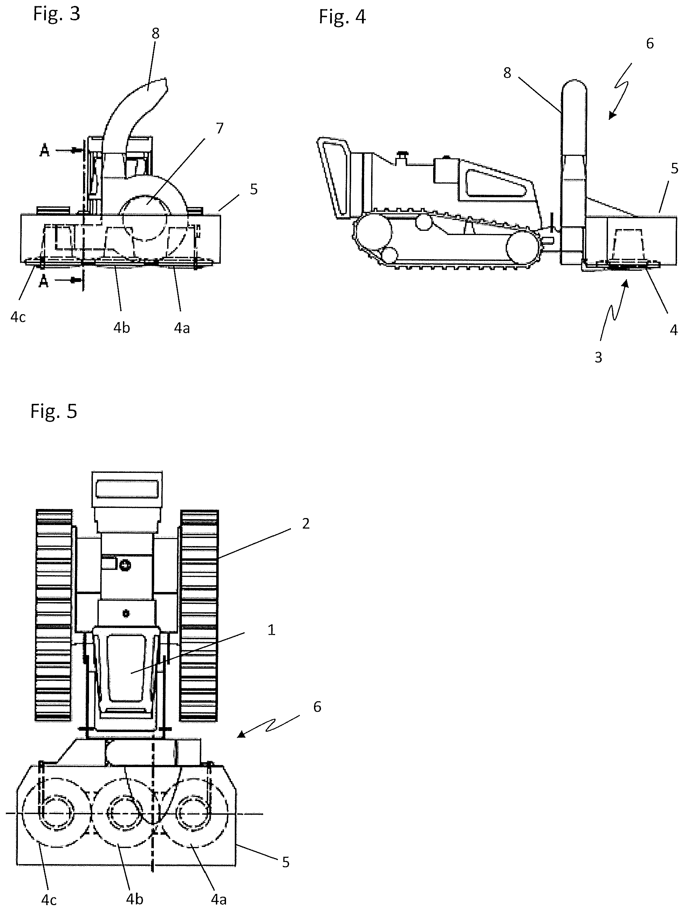

Die Fig. 1-5 zeigen ein ferngesteuertes Mähfahrzeug mit einer Antriebseinheit 1 und einem raupenartigen Fahrantrieb 2. Im vorderen Bereich des Mähfahrzeuges ist eine erfindungsgemäße Mähvorrichtung mit einem Mähbalken 3 angeordnet, der im gezeigten Ausführungsbeispiel drei entlang des Mähbalkens 3 drehbar angeordnete Mähscheiben 4a, 4b, 4c aufweist (siehe Fig. 2). Die Mähscheiben 4 können in bekannter Weise von der Antriebseinheit 1 aus mithilfe eines Antriebes und eines Getriebes, das den Antrieb mit den Mähscheiben 4a, 4b, 4c koppelt, in Rotation versetzt werden. Der Antrieb kann etwa mithilfe von Hydraulikmotoren verwirklicht werden. Das Getriebe zur Drehmomentübertragung auf die Mähscheiben 4 kann mithilfe von Gelenkwellen und Zahnrädern ausgeführt werden.

Der Mähbalken 3 ist von einer Abdeckung 5 umgeben, die in Form einer Abdeckhaube ausgebildet ist und sich oberhalb und seitlich des Mähbalkens 3 sowie vor dem Mähbalken 3 erstreckt. Die Abdeckung 5 dient während des Mähvorganges einerseits dazu geschnittenes Mähgut und sonstiges Material zurückzuhalten und andererseits auch der Unterstützung der vom Wurfgebläse ausgeübten Sogwirkung. Die Abdeckung 5 ist im gezeigten Ausführungsbeispiel als Plane ausgeführt, die an einem Rahmen mit vom Rahmen abstehenden, federnden Zinken (in den Fig. 1-6 nicht ersichtlich) befestigt ist und den Mähbalken 3 umgibt. Mithilfe der federnden Zinken wird die Plane insbesondere an ihrer vordersten Fläche stabilisiert. Die Abdeckung 5 ist an einem Gebläseaufbau 6 um eine vertikale Schwenkachse S schwenkbar angeordnet, sodass sie sich zu Reinigungs- oder Wartungsarbeiten am Mähbalken 3 seitlich verschwenken lässt, wie in der Fig. 2 ersichtlich ist.

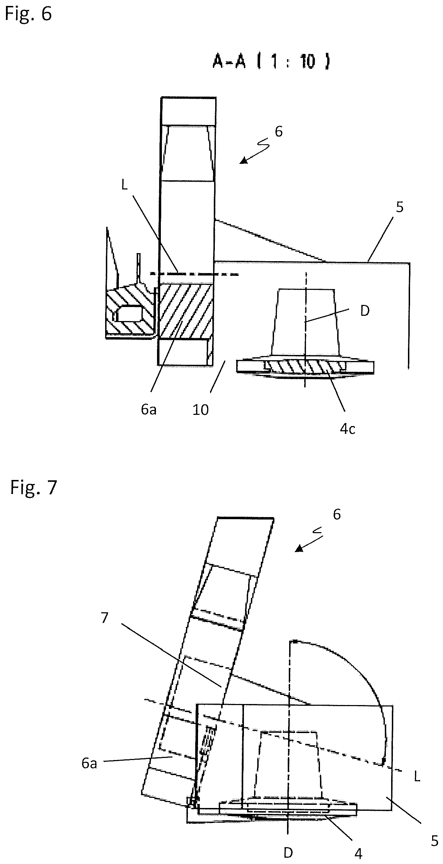

Der Gebläseaufbau 6 umfasst ein Wurfgebläse, von dem in der Fig. 2 die Einlauföffnung 7 in das Laufradgehäuse ersichtlich ist. Das Laufradgehäuse ist Teil des Gebläseaufbaus 6 und nimmt ein Laufrad auf, dessen Laufraddrehachse L in der gezeigten Ausführungsform der Fig. 1-6 horizontal verläuft (siehe Fig. 6). Geschnittenes Mähgut, das durch die Einlauföffnung 7 in das Laufradgehäuse eintritt, wird dem Laufrad somit in axialer Richtung zugeführt, vom Laufrad beschleunigt und durch das Auswurfrohr 8 ausgeworfen. Der Gebläseaufbau 6 ist ferner so ausgeführt, dass er eine rückseitige Begrenzungswand 6a für einen Sammelraum bildet, der von der Abdeckung 5 und der rückseitigen Begrenzungswand 6a umschlossen wird. Der Mähbalken 3 ist an der rückseitigen Begrenzungswand 6a mittels seitlicher Träger 9 vom Gebläseaufbau 6 beabstandet am Gebläseaufbau 6 gehalten, sodass zwischen dem Mähbalken 3 und der rückseitigen Begrenzungswand 6a eine den Sammelraum nach unten öffnende Fallöffnung 10 für nicht ausgeworfene Mähgutbestandteile gebildet wird (siehe auch Fig. 6).

Die Fig. 7 zeigt eine vergrößerte Darstellung des Bereiches zwischen dem Gebläseaufbau 6 und dem Mähbalken 3 für eine weitere Ausführungsform, bei der der Gebläseaufbau 6 als ein relativ zu den vertikalen Drehachsen D der Mähscheiben 4 geneigter Gebläseaufbau 6 ausgeführt ist. Die Laufraddrehachse L ist somit relativ zu den vertikalen Drehachsen D der Mähscheiben 4 geneigt ausgerichtet. Die axiale Einlaufrichtung für das geschnittene und auszuwerfende Mähgut verläuft in diesem Fall ebenfalls entlang der Laufraddrehachse L geneigt. Dadurch kann die Aufnahme von geschnittenem Mähgut durch die Einlauföffnung 7 verbessert werden. Vorzugsweise beträgt dabei der in der Fig. 7 eingezeichnete Winkel zwischen der Laufraddrehachse L und einer von den vertikalen Drehachsen D der Mähscheiben 4 definierten Vertikalebene zwischen 80° und 135°.

In weiterer Folge wird die Funktionsweise der erfindungsgemäßen Mähvorrichtung erläutert. Für den Mähvorgang befindet sich die Abdeckung 5 in der in der Fig. 1 gezeigten, unverschwenkten Position. Die Mähscheiben 4a, 4b, 4c sind jeweils um eine vertikale Drehachse D drehbar angeordnet. Das geschnittene Mähgut wird dabei von den Mähscheiben 4a, 4b, 4c in Umlaufrichtung der jeweiligen Mähscheibe 4a, 4b, 4c mitbewegt. Von den drei Mähscheiben 4a, 4b, 4c bewegen sich eine äußere Mähscheibe 4a und eine mittlere Mähscheibe 4b in gegensinniger Umlaufrichtung. Die gegenüberliegend äußere Mähscheibe 4c rotiert in dieselbe Richtung wie die mittlere Mähscheibe 4b. Das geschnittene Mähgut wird daher von der gegenüberliegend äußeren Mähscheibe 4c zur mittleren Mähscheibe 4b und von dort in Richtung der äußeren Mähscheibe 4a transportiert. Diese äußere Mähscheibe 4a transportiert das geschnittene Mähgut wiederum in Richtung der mittleren Mähscheibe 4b. Das Mähgut wird daher in einem mittigen Bereich zwischen den beiden gegensinnig roterenden Mähscheiben 4a, 4b zusammen geführt. Die Einlauföffnung 7 öffnet sich in diesen Bereich und nimmt das geschnittene und auszuwerfende Mähgut auf, wobei das geschnittene Mähgut dem Laufrad in axialer Richtung entlang der Laufraddrehachse L zugeführt wird. Das Mähgut wird dabei auf seinem Weg zur Einlauföffnung 7 innerhalb des Sammelraumes umgewälzt und bewegt, wobei unerwünschte, in der Regel schwere Mähgutbestandteile durch die Fallöffnung 10 abfallen und den Sammelraum durch die Fallöffnung 10 auch wieder verlassen können, die im Bereich zwischen der vom Gebläseaufbau 6 gebildeten, rückseitigen Begrenzungswand 6a und dem Mähbalken 3 vorgesehen ist.

Vorwiegend erwünschte, in der Regel leichtere Mähgutbestandteile erreichen die Einlauföffnung 7 und werden vom Wurfgebläse ausgeworfen. Der Auswurf von Mähgut durch Mähgutbestandteile, die nicht ausgeworfen werden können oder nicht ausgeworfen werden sollen, wird somit nicht mehr beeinträchtigt.

Die erfindungsgemäße Mähvorrichtung kann des Weiteren klein und kompakt und vergleichsweise kostengünstig gebaut werden, und ist auch bei schwierigem Terrain mit starkem und mitunter auch feuchtem Bewuchs einsetzbar.

## Patentansprüche

1. Mähvorrichtung mit einem Mähwerk für Mähgut, das als Mähbalken (3) mit zumindest zwei entlang des Mähbalkens (3) angeordnete und jeweils um eine vertikale Drehachse (D) drehbare Mähscheiben (4) ausgeführt ist, wobei eine Abdeckung (5) für den Mähbalken (3) vorgesehen ist, die einen Sammelraum für das geschnittene Mähgut umgrenzt, und eine Auswurfeinrichtung vorgesehen ist, die ein Wurfgebläse mit einem Laufrad und einer sich in den Sammelraum öffnenden Einlauföffnung (7) für das geschnittene und auszuwerfende Mähgut sowie ein Auswurfrohr (8) umfasst, wobei das Wurfgebläse in einem Gebläseaufbau (6) angeordnet ist, der eine rückseitige Begrenzungswand (6a) des Sammelraumes bildet, in der die Einlauföffnung (7) des Wurfgebläses für das geschnittene Mähgut vorgesehen ist, und das Laufrad des Wurfgebläses in einem als Teil des Gebläseaufbaus (6) ausgeführten Laufradgehäuse mit einer entlang der Laufraddrehachse (L) orientierten, axialen Einlaufrichtung für das geschnittene und auszuwerfende Mähgut angeordnet ist, **dadurch gekennzeichnet, dass** sich die Abdeckung (5) zur Unterstützung des vom Wurfgebläse erzeugten Soges auf das Mähgut oberhalb und seitlich des Mähbalkens (3) sowie in Fahrtrichtung der Mähvorrichtung gesehen vor dem Mähbalken (3) erstreckt, wobei zwischen dem Mähbalken (3) und der rückseitigen Begrenzungswand (6a) eine den Sammelraum nach unten öffnende Fallöffnung (10) für nicht ausgeworfene Mähgutbestandteile vorgesehen ist.

2. Mähvorrichtung nach Anspruch 1, **dadurch gekennzeichnet, dass** der Mähbalken (3) mittels seitlicher Träger (9) vom Gebläseaufbau (6) beabstandet am Gebläseaufbau (6) gehalten ist.

3. Mähvorrichtung nach Anspruch 1 oder 2, **dadurch gekennzeichnet, dass** der Gebläseaufbau (6) als ein im Wesentlichen vertikaler Gebläseaufbau (6) ausgeführt ist, und die Laufraddrehachse (L) im Wesentlichen horizontal ausgerichtet ist.

4. Mähvorrichtung nach Anspruch 1 oder 2, **dadurch gekennzeichnet, dass** der Gebläseaufbau (6) als ein relativ zu den vertikalen Drehachsen (D) der Mähscheiben (4) geneigter Gebläseaufbau (6) ausgeführt ist, und die Laufraddrehachse (L) relativ zu den vertikalen Drehachsen (D) der Mähscheiben (4) geneigt ausgerichtet ist.

5. Mähvorrichtung nach Anspruch 4, **dadurch gekennzeichnet, dass** der Winkel zwischen der Laufraddrehachse (L) und einer von den vertikalen Drehachsen (D) der Mähscheiben (4) definierten Vertikalebene zwischen 80° und 135° beträgt.

6. Mähvorrichtung nach einem der Ansprüche 1 bis 5, **dadurch gekennzeichnet, dass** die Abdeckung (5) schwenkbar am Gebläseaufbau (6) angeordnet ist und in eine den Mähbalken (3) freigebende Stellung schwenkbar ist.

7. Mähvorrichtung nach Anspruch 6, **dadurch gekennzeichnet, dass** die Schwenkachse der schwenkbar am Gebläseaufbau angeordneten Abdeckung vertikal ausgerichtet ist.

8. Mähvorrichtung nach einem der Ansprüche 1 bis 7, **dadurch gekennzeichnet, dass** die Abdeckung (5) als Plane ausgeführt ist, die gemeinsam mit der rückseitigen Begrenzungswand (6a) einen nach unten offenen aber ansonsten allseitig abgeschlossenen Sammelraum bildet, wobei die Plane an einem Rahmen mit vom Rahmen abstehenden, federnden Zinken befestigt ist.

9. Mähfahrzeug mit einer Mähvorrichtung nach einem der Ansprüche 1 bis 8.

## Claims

1. Mowing device with a mower for mowing material, which is designed as a cutter bar (3) with at least two mowing discs (4) arranged along the cutter bar (3) and each rotatable about a vertical axis of rotation (D), with a cover (5) for the cutter bar ( 3) is provided, which delimits a collection space for the cut crop, and an ejection device is provided, which includes a throwing fan with an impeller and an inlet opening (7) opening into the collection space for the cut crop to be ejected and an ejection pipe (8), wherein the throwing fan is arranged in a blower structure (6) which forms a rear boundary wall (6a) of the collecting space, in which the inlet opening (7) of the throwing fan is provided for the cut crop, and the impeller of the throwing fan is arranged in an impeller housing which is formed as part of the blower structure (6) and arranged with an axial inlet direction oriented along the impeller axis of rotation (L) for the cut crop to be ejected, **characterized in that** the cover (5) is located above and to the side of the cutter bar (3) to support the suction generated by the throwing fan on the crop and extends in front of the cutter bar (3) as seen in the direction of travel of the mowing device, with a drop opening (10) being provided between the cutter bar (3) and the rear boundary wall (6a) which opens the collecting space downwards for unejected crop components.

2. Mowing device according to claim 1, **characterized in that** the cutter bar (3) is held on the blower structure (6) at a distance from the blower structure (6) by means of lateral supports (9).

3. Mowing device according to claim 1 or 2, **characterized in that** the blower structure (6) is designed as a substantially vertical blower structure (6), and the impeller axis of rotation (L) is aligned substantially horizontally.

4. Mowing device according to claim 1 or 2, **characterized in that** the blower structure (6) is designed as a blower structure (6) inclined relative to the vertical axes of rotation (D) of the mowing discs (4), and the impeller axis of rotation (L) is aligned inclined relative to the vertical axes of rotation (D) of the mowing discs (4).

5. Mowing device according to claim 4, **characterized in that** the angle between the impeller axis of rotation (L) and a vertical plane defined by the vertical axes of rotation (D) of the mowing discs (4) is between 80° and 135°.

6. Mowing device according to one of claims 1 to 5, **characterized in that** the cover (5) is pivotally arranged on the blower structure (6) and can be pivoted into a position releasing the cutter bar (3).

7. Mowing device according to claim 6, **characterized in that** the pivot axis of the cover pivotably arranged on the blower structure is aligned vertically.

8. Mowing device according to one of claims 1 to 7, **characterized in that** the cover (5) is designed as a tarpaulin which, together with the rear boundary wall (6a), forms a collection space that is open at the bottom but is otherwise closed on all sides, the tarpaulin being attached to a frame with resilient tines protruding from the frame.

9. Mowing vehicle with a mowing device according to one of claims 1 to 8.

## Revendications

1. Dispositif de fauchage avec une faucheuse pour une herbe à faucher, conçu comme un lamier (3) avec au moins deux disques de faucheuse (4) disposés le long du lamier (3) et capables de rotation chacun autour d'un axe de rotation vertical (D), dans lequel est prévu un capot (5) pour le lamier (3) qui délimite un espace de collecte de l'herbe fauchée et il est prévu un dispositif éjecteur qui comprend une soufflerie d'éjection avec une roue et une ouverture d'entrée (7) donnant sur l'espace de collecte de l'herbe fauchée et à éjecter ainsi qu'un tube d'éjection (8), dans lequel la soufflerie d'éjection est disposée dans une structure de soufflerie (6) qui forme une paroi de délimitation arrière (6a) de l'espace de collecte dans laquelle est prévue l'ouverture d'entrée (7) de la soufflerie d'éjection pour l'herbe fauchée, et la roue de la soufflerie d'éjection est disposée dans un carter de roue conçu comme une partie de la structure de soufflerie (6) avec un sens d'entrée axial orienté le long de l'axe de rotation de la roue (L) pour l'herbe fauchée et à éjecter, **caractérisé en ce que** le capot (5) s'étend, pour soutenir l'aspiration créée par la soufflerie d'éjection sur l'herbe fauchée, au-dessus et sur le côté du lamier (3) et, vu dans le sens de la marche du dispositif de fauchage, devant le lamier (3), une ouverture de chute (10) pour les composantes de l'herbe fauchée non éjectées, qui ouvre l'espace de collecte vers le bas, étant prévue entre le lamier (3) et la paroi de délimitation arrière (6a),

2. Dispositif de fauchage selon la revendication 1, **caractérisé en ce que** le lamier (3) est retenu sur la structure de soufflerie (6) à distance de la structure de soufflerie (6) au moyen de supports latéraux (9).

3. Dispositif de fauchage selon la revendication 1 ou 2, **caractérisé en ce que** la structure de soufflerie (6) est réalisée comme une structure de soufflerie (6) sensiblement verticale et l'axe de rotation de la roue (L) est orienté sensiblement à l'horizontale.

4. Dispositif de fauchage selon la revendication 1 ou 2, **caractérisé en ce que** la structure de soufflerie (6) est réalisée comme une structure de soufflerie (6) inclinée par rapport aux axes de rotation verticaux (D) des disques de faucheuse (4) et l'axe de rotation de la roue (L) est orienté à l'oblique par rapport aux axes de rotation verticaux (D) des disques de faucheuse (4).

5. Dispositif de fauchage selon la revendication 4, **caractérisé en ce que** l'angle entre l'axe de rotation de la roue (L) et un plan vertical défini par les axes de rotation verticaux (D) des disques de faucheuse (4) est compris entre 80° et 135°.

6. Dispositif de fauchage selon l'une des revendications 1 à 5, **caractérisé en ce que** le capot (5) est disposé de façon basculante sur la structure de soufflerie (6) et peut basculer dans une position qui dégage le lamier (3).

7. Dispositif de fauchage selon la revendication 6, **caractérisé en ce que** l'axe de basculement du capot disposé de façon basculante sur la structure de soufflerie est orienté verticalement.

8. Dispositif de fauchage selon l'une des revendications 1 à 7, **caractérisé en ce que** le capot (5) est conçu comme une bâche qui forme, avec la paroi de délimitation arrière (6a), un espace de collecte ouvert en dessous mais fermé sur tous les autres côtés, la bâche étant fixée sur un cadre muni de dents élastiques qui dépassent du cadre.

9. Faucheuse automotrice munie d'un dispositif de fauchage selon l'une des revendications 1 à 8.
